# EUROPÄISCHE PATENTSCHRIFT

(11) **EP 3 253 550 B1**
(45) Veröffentlichungstag und Bekanntmachung des Hinweises auf die Patenterteilung: **20.02.2019**
(21) Anmeldenummer: 15813394.2
(22) Anmeldetag: 17.12.2015
(51) Int. Cl.: B29C 45/67, F15B 15/26

(54) **SCHLIESSEINHEIT EINER SÄULEN AUFWEISENDEN SPRITZGIESSMASCHINE**
CLOSING UNIT OF AN INJECTION-MOLDING MACHINE, SAID INJECTION-MOLDING MACHINE HAVING COLUMNS
UNITÉ DE FERMETURE D'UNE PRESSE À INJECTION PRÉSENTANT DES COLONNES

(30) Priorität: 04.02.2015 DE 102015101570
(43) Veröffentlichungstag der Anmeldung: 13.12.2017
(73) Patentinhaber: KraussMaffei Technologies GmbH, 80997 München (DE)
(72) Erfinder: AMMER, Daniel, 81735 München (DE); SCHWEISSTHAL, Patrick, 80995 München (DE)
(74) Vertreter: Wilhelm, Ludwig
(86) Internationale Anmeldenummer: PCT/EP2015/080189
(87) Internationale Veröffentlichungsnummer: WO 2016/124290

(56) Entgegenhaltungen:
- EP-A2- 2 226 513
- WO-A1-00/53950
- WO-A1-00/67987
- WO-A1-2010/109374
- CH-A- 413 532
- DE-A1- 10 104 652
- US-A1- 2008 054 239
- US-A1- 2010 213 036
- JAMALY F: "SICHERHEITSKONZEPTE FUER OELHYDRAULISCHE HUBWERKE. ÖTEIL I: KONVENTIONELLE SICHERUNGSMECHANISMEN GEGEN UNBEABSICHTIGTES ABSINKEN UND IHRE THEORETISCHE BEWERTUNG", O & P - OELHYDRAULIK UND PNEUMATIK: ZEITSCHRIFT FUER FLUIDTECHNIK, AKTORIK, STEUERELEKTRONIK UND SENSORIK, VEREINIGTE FACHVERLAGE GMBH, DE, Bd. 40, Nr. 1, 1. Januar 1996 (1996-01-01) , Seiten 57-62, XP000195395, ISSN: 0341-2660
- Formschließköpfe Bauart ET AL: "Klemmen, Antreiben und Lösen durch Hydraulikdruck SITEMA-PowerStroke FSK Technische Information SITEMA-PowerStroke SITEMA-PowerStroke FSK Technische Information", , 31. Januar 2016 (2016-01-31), XP055262647, Gefunden im Internet: URL:http://www.sitema.de/gfx_content/pdf/d e/powerstroke/SITEMA-TI-P11-DE.pdf [gefunden am 2016-04-04]

## Beschreibung

Die Erfindung betrifft eine Schließeinheit einer Säulen aufweisenden Spritzgießmaschine nach dem Oberbegriff des Anspruchs 1.

Aus dem Stand der Technik ist es beispielsweise bekannt, eine Schließeinheit für eine Zwei-Platten-Spritzgießmaschine zur Schließkrafterzeugung mit Kurzhubzylindern, z. B. Druckkissen auszustatten und die Verriegelung zwischen einer Säule und einer Werkzeugaufspannplatte zur Schließkraftübertragung mechanisch zu bewerkstelligen. Hierbei ist besonders eine Verriegelung durch Formschluss gebräuchlich, wobei die Säulen in einem bestimmten Bereich Verzahnungen aufweisen, in die Verriegelungsmittel eingeklappt oder eingeschoben werden können, so dass ein Formschluss zwischen einer Werkzeugaufspannplatte und der Säule entsteht.

Ein derartiges hydromechanisches Prinzip hat sich als Standard bei hohen Schließkräften etabliert und bewährt. Im Bereich kleiner Schließkräfte weist ein solches System Kostennachteile auf, da eine Vielzahl von Bauteilen zur Ausbildung der Verriegelungen notwendig ist. Durch das Einklappen bzw. Einschieben der Verriegelungselemente ist darüber hinaus ein bestimmtes Maß an Zykluszeit erforderlich, was unerwünscht ist.

Darüber hinaus hat sich für eine Schließeinheit einer Spritzgießmaschine auch ein vollhydraulisches Wirkprinzip etabliert, bei dem sowohl das Verfahren der Werkzeugaufspannplatten zueinander, der Schließkraftaufbau, als auch das Verriegeln rein hydraulisch bewerkstelligt wird. Dieses Prinzip hat als Vorteil eine geringe Anzahl von Bauteilen. Nachteilig ist aber, dass aufgrund der hohen erforderlichen Ölmenge (lange Ölsäule) erhebliche Nachteile hinsichtlich des Energieverbrauchs hinzunehmen sind. Dies liegt u.a. daran, dass die hohe Ölmenge (Ölsäule) bei der Fahrbewegung mitgeschleppt werden muss und die Ölsäule beim Schließkraftaufbau verdichtet werden muss.

Aus der WO 2010/109374 A1 ist eine Verriegelungseinrichtung für Säulen von Spritzgießmaschinen bekannt geworden, die auf einem Keilklemmprinzip basiert. In einem Klemmmantel ist eine Klemmhülse angeordnet, die einerseits mit der zu klemmenden Säule und andererseits über eine Keilfläche und/oder Kegelfläche mit einer Betätigungshülse zusammenwirkt. Die Betätigungshülse ist hydraulisch in einem geringen Maße innerhalb des Klemmmantels verschiebbar, so dass eine in gelöstem Zustand bzgl. der Klemmhülse verschiebliche Säule beim Betätigen der Betätigungshülse klemmend bzgl. der Klemmeinrichtung haltbar ist.
Bei einer derartigen Klemmvorrichtung ist es von Nachteil, dass durch die Bewegung der Säule verschiedene Arten von Verunreinigungen, z. B. Wasser, Kühlwasser, Schmutz, Fett, Trennmittel und dergleichen zwischen die Klemmhülse und dem zu klemmenden Säulenbereich gelangen kann, wodurch es zu ungewolltem Reibkraftverlust oder übermäßigem Verschleiß zwischen der Klemmhülse und der Säule kommen kann. In einem solchen Fall ist nicht immer gewährleistet, dass die Klemmkraft ausreichend hoch ist, um die erforderliche Schließkraft aufrecht zu erhalten oder die Lebensdauer der Vorrichtung wird aufgrund von Verschleißprozessen maßgeblich verkürzt.

Sowohl aus der Europäischen Patentanmeldung EP2226513 A2, als auch aus der technischen Informationsschrift TI-P11 -DE-05/2013 der Fa. Sitema GmbH & Co. KG ist ein Formschließkopf der Bauart FSK bekannt, welcher als hydraulisch betätigbare Klemmeinrichtung zum Festlegen einer Werkzeugaufspannplatte bzgl. einer Säule einer Spritzgießmaschine einsetzbar ist. Dieser Formschließkopf nutzt das Keilklemmprinzip mit einer Klemmhülse und einer Betätigungshülse, wobei der Formschließkopf zusammen mit der Werkzeugaufspannplatte, an der der Formschließkopf angebracht ist, relativ zur Säule entlang des Verfahrweges verschiebbar ist und im Falle einer Klemmung radial nach innen wirkende Klemmkräfte bzgl. der Säule aufbauen kann. Ein derartiger Formschließkopf hat die gleichen Nachteile, wie sie oben bzgl. der WO 2010/109374 A1 beschrieben wurden. Es besteht die Gefahr der Verunreinigung der Reibfläche zwischen der Klemmhülse und den entsprechenden Oberflächen der Säule.
Aufgabe der Erfindung ist es, eine Schließeinheit mit einer Klemmverriegelungsvorrichtung anzugeben, welche zum einen erlaubt, einen Durchmesser der festzulegenden Säule möglichst klein zu halten und trotzdem genügend hohe Reibkräfte erzeugbar sind. Zum anderen soll erreicht werden, dass die Klemmverriegelungsvorrichtung unempfindlich gegenüber äußeren Umwelteinflüssen, z. B. Ölleckagen, Kühlwasser, Ablagerungen, Staub, Fett oder sonstigem Schmutz, mit dem die Säule in Berührung kommen kann, ist.

Des Weiteren soll eine besondere Ausführungsform der Erfindung verschleißminimiert sein.

Außerdem soll die Anzahl der erforderlichen Bauteile minimiert werden und insbesondere ein geringer Energieverbrauch realisierbar sein.

Des Weiteren soll die Betriebssicherheit des Systems gegenüber bestehenden reibschlüssigen Klemmverriegelungsvorrichtungen deutlich erhöht werden und/oder ein Zeitbedarf zum Aufbau einer ausreichenden Festlegung der Werkzeugaufspannplatten gegenüber mechanischen Systeme deutlich verringert werden.

Diese Aufgaben werden durch eine Schließeinheit mit den Merkmalen des Anspruchs 1 gelöst. Vorteilhafte Ausführungsformen sind in den Unteransprüchen angegeben.

Eine erfindungsgemäße Schließeinheit einer Säulen aufweisenden Spritzgießmaschine mit zumindest einer Klemmverriegelungsvorrichtung, insbesondere eine Schließeinheit einer Zwei-Platten-Spritzgießmaschine, gemäß der Erfindung weist zumindest eine mittels der Klemmverriegelungsvorrichtung bezüglich einer der Werkzeugaufspannplatten festlegbaren Säule und zumindest eine Klemmeinrichtung zum klemmenden Verriegeln der zumindest einen Säule bezüglich eines Klemmmantels an beliebigen Positionen entlang eines Verfahrweges einer ersten Werkzeugaufspannplatte relativ zu einer zweiten Werkzeugaufspannplatte auf. Erfindungsgemäß ist eine derartige Schließeinheit dadurch gekennzeichnet, dass die Klemmeinrichtung in gelöstem Zustand zusammen mit der Säule entlang des Verfahrweges innerhalb des Klemmmantels verschieblich ist und zur Klemmung mittels der Klemmeinrichtung eine bzgl. einer Säulenlängsachse radial nach außen gerichtete Klemmkraft zwischen dem Klemmmantel und der Klemmeinrichtung bewirkbar ist. Mit einer derartigen erfindungsgemäßen Ausbildung der Schließeinheit bzw. deren Klemmverriegelungsvorrichtung gelingt es, den Säulendurchmesser möglichst klein zu halten, da eine Außenseite der Säule für eine Generierung einer ausreichend hohen Klemmkraft nicht benötigt wird. Vielmehr wird erfindungsgemäß die Klemmeinrichtung derart ausgebildet, dass sie radial nach außen eine zum umgebenden Klemmmantel hin gerichtete Klemmkraft ausbildet. Der Klemmmantel umgibt die Klemmeinrichtung außenseitig und hat somit gegenüber der Säule einen größeren Innendurchmesser, was die für die Klemmung zur Verfügung stehende Innenumfangsfläche, die eine Teilfläche des Klemmmantels ist, vergrößert.

Des Weiteren ist der Klemmmantel über die gesamte Länge der für den Verfahrweg notwendigen Strecke kapselnd um die Säule herum angeordnet, so dass diese und die Klemmvorrichtung sich im Inneren des Klemmmantels befindet und somit in positiver Art und Weise von der Beaufschlagung mit unerwünschtem Schmutz oder anderen Ablagerungen, wie z. B. Öl, Fett, Kühlwasser oder dergleichen ausgenommen sind. Hierdurch ist insbesondere die dauerhafte Betriebssicherheit sichergestellt, da der Reibkontakt zwischen der Klemmeinrichtung und der Innenseite des Klemmmantels, der bevorzugt rohrförmig ausgebildet ist, dauerhaft frei von Verschmutzungen gehalten werden kann.

Hierzu ist insbesondere vorgesehen, dass in einem Bereich vor dem Eintritt eines Säulenabschnitts in den Innenraum des Klemmmantels eine Abstreifereinrichtung vorgesehen ist, mittels der unerwünschter Schmutz und/oder Fett und/oder Kühlwasser und/oder Ablagerungen wie z. B. Staub oder eine Ölleckage von der Säule abstreifbar ist. Derartige Verunreinigungen können an die Außenseite der Säule gelangen, wenn Teilbereiche der Säule, beispielsweise bei vollständig geöffnetem Werkzeug sich außerhalb des Klemmmantels befinden.

Es hat sich als Vorteil herausgestellt, den Klemmmantel als fett- und/oder schmutzdichten Rohrkörper auszubilden.

In einer ersten Bauvariante kann der Klemmmantel dabei bezüglich einer Werkzeugaufspannplatte, d. h. bezüglich der festen Werkzeugaufspannplatte oder bezüglich der beweglichen Werkzeugaufspannplatte örtlich festgelegt sein. Gleichwohl ist es auch möglich, dass der Klemmmantel unter Zwischenschaltung eines Druckzylinders oder eines Druckkissens mit der Werkzeugaufspannplatte verbunden ist. Bei dieser Ausführungsform kann der Klemmmantel einendig als Kolben des Druckzylinders oder des Druckkissens wirken oder mit diesem in direkter Wirkverbindung stehen, beispielsweise über eine Zug-/Druckstange.

Bevorzugt ist, dass ein Innenraum des Klemmmantels luft- oder ölgefüllt ist. Es hat sich herausgestellt, dass bei einer Ölfüllung eine ebenso zuverlässige Klemmung herbeigeführt werden kann. Vorteilhaft bei einer Luftfüllung ist, dass die Spülverluste beim Umspülen der im Klemmmantel befindlichen Luft von der einen Seite des Klemmelements hin zur anderen Seite des Klemmelements minimiert sind.

In bevorzugter Art und Weise kann die Klemmeinrichtung zumindest einen hydraulisch mit Fluid beschickbaren Druckraum aufweisen, wobei mittels unter Druck stehendem Fluid der zumindest eine Druckraum der Klemmeinrichtung zur Erzeugung der Klemmkraft radial elastisch aufweitbar ist. Dabei ist in einem radial elastisch aufgeweiteten Zustand eine Klemmung über eine Außenumfangsfläche der Klemmeinrichtung mit einer Innenseite des Klemmmantels gewährt. Wird ein Fluiddruck reduziert, so verringert sich ein wirksamer Außendurchmesser der Klemmeinrichtung gegenüber der Innenseite des Klemmmantels und gibt somit die Klemmeinrichtung gegenüber dem Klemmmantel wieder frei, so dass diese erneut verschieblich gegenüber dem Klemmmantel ist.

In einer weiteren vorteilhaften Ausführungsform ist die Klemmeinrichtung als hydraulisch betätigbare Keilklemmvorrichtung mit einer Klemmhülse und einer Betätigungshülse ausgebildet, wobei die Betätigungshülse innerhalb eines Gehäuses der Klemmeinrichtung in einer Axialrichtung hydraulisch verschiebbar angeordnet ist und über eine Keil- oder Kegelfläche mit der Klemmhülse zusammenwirkt.

Für die Ausführungsform der Klemmeinrichtung als Keilklemmvorrichtung besteht vorteilhafter Weise die Möglichkeit, dass die Klemmeinrichtung radial innen zur Säule weisend eine offene Klemmkammer besitzt und das Gehäuse der Klemmeinrichtung durch Reaktionskräfte der Teilklemmeinrichtung radial hinsichtlich ihres Außendurchmessers elastisch aufweitbar ist.

In einer anderen Ausführungsform weist die Klemmeinrichtung radial außen zum Klemmmantel weisend eine offene Klemmkammer auf, in der die Klemmhülse mit einer Innenseite des Klemmmantels reibschlüssig zusammenwirkend angeordnet ist. Mittels einer Betätigungshülse, die mit der Klemmhülse über eine Keil- oder Kegelfläche zusammenwirkt, kann die Klemmhülse hinsichtlich ihres Durchmessers verkleinert und vergrößert werden, wobei bei einer Verkleinerung des Durchmessers der Klemmhülse die Klemmung zum außen umgebenden Klemmmantel aufhebbar ist.

Bei der Erfindung wird somit erstmals der Weg beschritten, nicht die Säule bei gelöster Klemmung bezüglich der Klemmeinrichtung beweglich zu gestalten, sondern die Klemmeinrichtung zusammen mit der Säule in gelöstem Zustand relativ zum Klemmmantel entlang des insbesondere gesamten Verfahrweges beweglich, insbesondere verschiebbar auszubilden, so dass eine Klemmung zwischen dem Klemmmantel und der Klemmeinrichtung auf einem gegenüber dem Säulendurchmesser größeren Wirkdurchmesser stattfindet. Hierdurch gelingt es einerseits den Säulendurchmesser gering zu halten und andererseits, den Klemmmantel, der zugleich als Kapselung wirksam ist, als Klemmpartner zu nutzen.

Weitere vorteilhafte Ausführungsformen sind in weiteren Patentansprüchen oder der nachfolgenden Beschreibung von Ausführungsbeispielen angegeben.

Im Folgenden wird die Erfindung anhand der Zeichnung beispielhaft näher erläutert. Es zeigen:
- Figur 1:: schematisch eine erfindungsgemäße Schließeinheit einer Spritzgießmaschine in einer Seitenansicht aufweisend eine erfindungsgemäße Klemmverriegelungsvorrichtung in einer ersten Ausführungsform;
- Figur 2:: schematisch eine erfindungsgemäße Schließeinheit einer Spritzgießmaschine in einer Seitenansicht aufweisend eine erfindungsgemäße Klemmverriegelungsvorrichtung in einer zweiten Ausführungsform;
- Figur 3:: eine erste Ausführungsform einer Klemmeinrichtung der Klemmverriegelungsvorrichtung in einem schematischen Längsschnitt;
- Figur 4:: in der oberen Schnittdarstellung eine zweite und in der unteren Schnittdarstellung eine dritte Ausführungsform der Klemmeinrichtung einer Klemmverriegelungsvorrichtung, welche beide das Keil-Klemmprinzip nutzen.

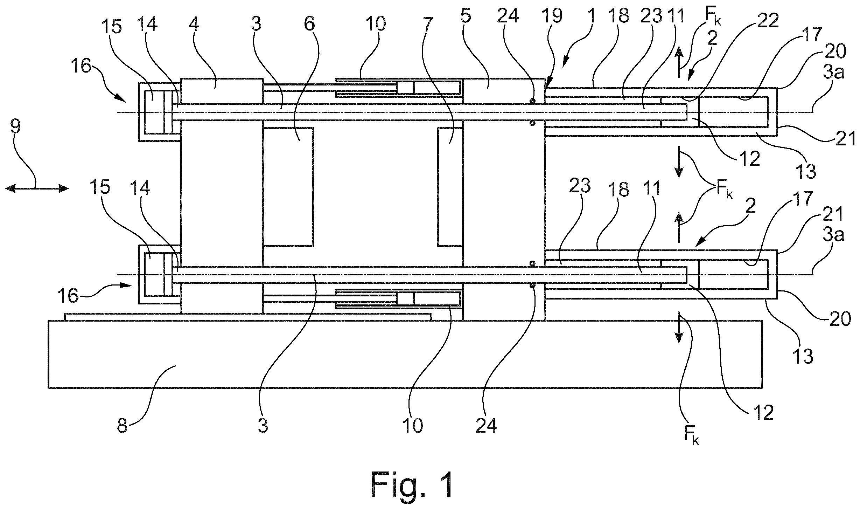

In Figur 1 ist eine erfindungsgemäße Schließeinheit 25 einer Spritzgießmaschine 1 mit einer erfindungsgemäßen Klemmverriegelungsvorrichtung 2 dargestellt. Die Spritzgießmaschine 1 weist Säulen 3 auf, denen jeweils eine Klemmverriegelungsvorrichtung 2 zugeordnet ist. Die Spritzgießmaschine 1 weist eine erste Werkzeugaufspannplatte 4 und eine zweite Werkzeugaufspannplatte 5 auf, wobei an der ersten Werkzeugaufspannplatte 4 eine erste Formwerkzeughälfte 6 und an der zweiten Werkzeugaufspannplatte 5 eine zweite Formwerkzeughälfte 7 angeordnet ist. Im Ausführungsbeispiel gemäß Fig. 1 ist die erste Werkzeugaufspannplatte 4 die bewegliche Werkzeugaufspannplatte. Die zweite Werkzeugaufspannplatte 5 ist die feste Werkzeugaufspannplatte. Die bewegliche erste Werkzeugaufspannplatte 4 ist gegenüber einem Maschinenbett 8 in einer Öffnungs- und Schließrichtung 9 mittels Verfahrzylindern 10 verschieblich gelagert. Selbstverständlich ist die in Fig. 1 dargestellte Ausführungsform der Spritzgießmaschine 1 nicht auf Verfahrzylinder 10 zum Öffnen und Schließen der Werkzeugaufspannplatten 4, 5 beschränkt. Vielmehr eignen sich auch andere Antriebe, wie z. B. Kniehebelantriebe oder andere Linearantriebe zum Öffnen und Schließen der Werkzeugaufspannplatten 4, 5.
Die Säulen 3 weisen jeweils eine Säulenlängsachse 3a auf. An einem ersten Ende 11 der Säulen 3 sitzt eine Klemmeinrichtung 12, welche jeweils in einem zugeordneten Klemmmantel 13 in gelöstem Zustand entlang der Öffnungs- und Schließrichtung 9 verschieblich gelagert ist. An einem zweiten Ende 14 der Säulen sind bevorzugt Druckzylinder 15 angeordnet, welche insbesondere als Druckkissen 16 ausgebildet sein können. Die Druckzylinder 15, insbesondere die Druckkissen 16 dienen in bekannter Art und Weise im Schließkraftaufbau, wenn mittels der Verfahrzylinder 10 die Werkzeugaufspannplatten 4, 5 soweit aufeinander zu gefahren sind, dass die Formwerkzeughälften 6, 7 aneinander liegen.

Die Klemmeinrichtung 12 ist in der Lage, bzgl. der Säulenlängsachse 3a radial nach außen gerichtete Klemmkräfte Fₖ zu erzeugen, welche sich an einer Innenseite 17 des Klemmmantels 13 abstützen. Der Klemmmantel 13 ist bevorzugt als Rohrkörper 18 ausgebildet, welcher z. B. einen kreisförmigen oder gegebenenfalls auch quadratischen oder rechteckigen Querschnitt besitzt. Der Klemmmantel 13 ist mit einem ersten Ende 19 an der zweiten Werkzeugaufspannplatte 5 befestigt. An einem zweiten Ende 20 ist der Klemmmantel 13 geschlossen ausgebildet und weist eine Endwandung 21 auf. Hinsichtlich der Längserstreckung zwischen dem ersten Ende 19 und dem zweiten Ende 20 oder der Endwandung 21 ist der Klemmmantel 13 derart ausgebildet, dass er in der Lage ist, die Klemmeinrichtung 12 und die Säule 3 entlang des gesamten Verfahrweges entlang der Öffnungs- und Schließrichtung 9 zu umgeben.

Die Klemmeinrichtung 12 ist bei der erfindungsgemäßen Klemmverriegelungsvorrichtung 2 fest mit der zugehörigen Säule 3 verbunden und in gelöstem Zustand der Klemmeinrichtung 12 zusammen mit deren erstem Ende 11 entlang des gesamten Verfahrweges in Öffnungs- und Schließrichtung 9 innerhalb des Klemmmantels 13 verschieblich.

Hierdurch wird somit eine gekapselte Klemmverriegelungsvorrichtung 2 geschaffen, welche während des Betriebs des Spritzgießmaschine 1 verschmutzungsfrei bleibt. Durch die Kapselung wird erreicht, dass die Innenseite 17 des Klemmmantels 13 und eine radial äußere Umfangsfläche 22 der Klemmeinrichtung 12 bei jedem Aufbringen der Klemmkraft Fₖ eine zuverlässige Verklemmung bzw. Blockierung der Säule 3 gegenüber dem Klemmmantel 13 bewirken kann, da die zusammenwirkenden Flächen (Umfangsfläche 22; Innenseite 17) wirksam von Verschmutzungen verschont bleiben.

Um zu verhindern, dass mittels der Säule 3 beim Verfahren der Werkzeugaufspannplatten 4, 5 entlang der Öffnungs- und Schließrichtung 9 Schmutz in einen Innenraum 23 des Klemmmantels 13 gelangen kann, sind zweckmäßigerweise Abstreifeinrichtungen 24 vorgesehen, welche z. B. innerhalb einer Durchgriffsöffnung der zweiten Werkzeugaufspannplatte 5, durch die die Säule 3 läuft, angeordnet sind. Die Abstreifeinrichtungen 24 wirken dabei mit einer Außenseite der Säulen 3 zusammen und säubern diese, bevor die Säule in den Innenraum 23 des Klemmmantels 13 gelangen kann.

Die erfindungsgemäße Klemmverriegelungsvorrichtung 2 ist somit wenigstens durch den Klemmmantel 13, die Klemmeinrichtung 12 und eine jeweils zugeordnete Säule 3 gebildet. Eine oder mehrere erfindungsgemäße Klemmverriegelungsvorrichtungen 2 bilden zusammen mit einem oder mehreren Druckzylindern 15 oder Druckkissen 16 eine Schließeinheit 25 mittels der ein zuverlässiges Zuhalten der Werkzeugaufspannplatten 4, 5 einerseits und das Aufbringen von ausreichend hohen Schließkräften mittels der Druckzylinder 15 oder der Druckkissen 16 andererseits gewährleistet ist.

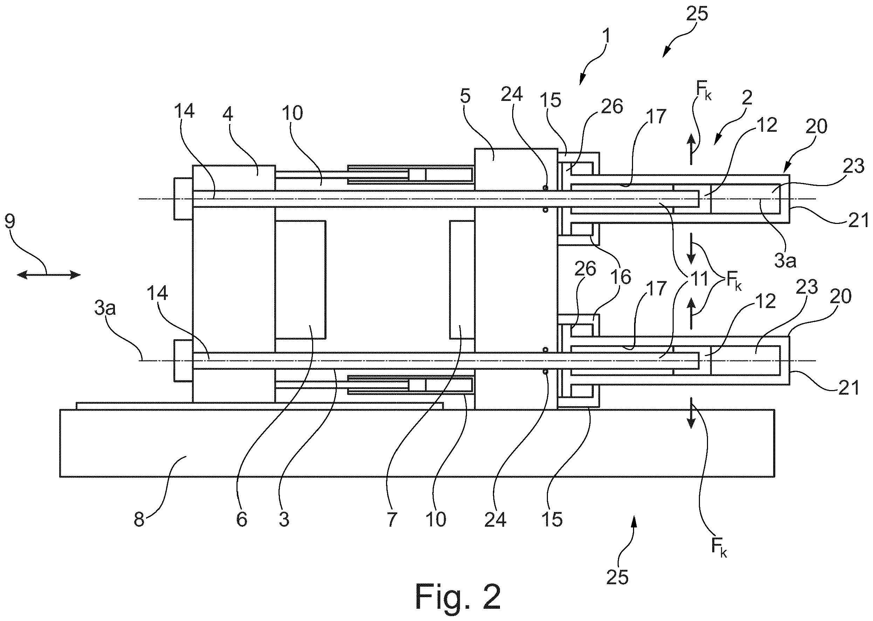

Figur 2 zeigt eine erfindungsgemäße Schließeinheit 25 einer Spritzgießmaschine 1, aufweisend zumindest eine erfindungsgemäße Klemmverriegelungsvorrichtung 2, wobei die Klemmverriegelungsvorrichtung 2 über Druckzylinder 15 bzw. Druckkissen 16 mit der zweiten Werkzeugaufspannplatte 5 gekoppelt ist.

Bei dieser Ausführungsform einer Schließeinheit 25 einer Spritzgießmaschine 1 sind eine Vielzahl gleicher oder nur gering abgewandelter Bestandteile gegenüber der Ausführungsform gemäß Figur 1 vorhanden, so dass im Folgenden für gleiche Teile gleiche Bezugszeichen verwendet werden und lediglich auf die Unterschiede zur Ausführungsform gemäß Figur 1 eingegangen wird. Im Übrigen können Merkmale, die im Zusammenhang mit einer Ausführungsform der Spritzgießmaschine 1 gemäß Figur 1 beschrieben werden, ohne Weiteres auf eine Spritzgießmaschine 1 gemäß Figur 2 übertragen werden.

Im Unterschied zur Ausführungsform gemäß Figur 1 ist das zweite Ende der Säulen 3 fest, d. h. ohne Zwischenschaltung eines Druckkissens 16 oder eines Druckzylinders 15 an der ersten Werkzeugaufspannplatte 4 angebunden. Das zweite Ende des Klemmmantels 13 sitzt im Inneren des Druckzylinders 15, bzw. des Druckkissens 16 und wirkt als hydraulischer Kolben des Druckzylinders 15 bzw. des Druckkissens 16. Im Rahmen des Schließkraftaufbaus entstehen im Vergleich zum Verfahrweg in Öffnungs- und Schließrichtung 9 hauptsächlich aufgrund elastischer Verformung sehr viel kleinere Verfahrwege des Klemmmantels 13 innerhalb des Druckzylinders 15 bzw. des Druckkissens 16. Der Klemmmantel 13 ist bei dieser Ausführungsform innerhalb dieser elastisch bedingten kleinen Verfahrwege gegenüber der zweiten Werkzeugaufspannplatte 5 verschieblich gelagert. Sofern eine Klemmkraft Fₖ mittels der Klemmeinrichtung 12 aufgebracht wird, ist die Säule 3 jeweils innerhalb des zugehörigen Klemmmantels 13 festgelegt. Durch Aufbringen von hydraulischen Druck innerhalb des Druckzylinders 15 oder dem Druckkissen 16 kann dann durch geringfügige Verlagerung des Klemmmantels 13 relativ zur zweiten Werkzeugaufspannplatte 5, die insbesondere auf elastische Verformung der Gesamtanordnung zurückzuführen ist, der Schließkraftaufbau zum Schließen des Formwerkzeugs (erste Formwerkzeughälfte 6 und zweite Formwerkzeughälfte 7) bewerkstelligt werden.

Die Abstreifereinrichtungen 24 können, wie bei der Ausführungsform gemäß Figur 1 zweckmäßiger Weise in einer Durchgriffsöffnung der Säulen 3 der zweiten Werkzeugaufspannplatte 5 sitzen. Alternativ oder zusätzlich können diese Abstreifereinrichtungen 24 auch in einer Druchgriffsöffnung einer Bodenwandung 26 des Klemmmantels 13 sitzen, welche von der Säule 3 in dieser Ausführungsform durchgriffen wird.

Die Bodenwandung 26 kann beispielsweise als Hydraulikkolben des Druckzylinders 15 bzw. des Druckkissens 16 dienen und entsprechend angepasst ausgebildet sein.

Die im Zusammenhang mit der Figur 1 beschriebenen Vorteile hinsichtlich der Kapselung und der verminderten bzw. verhinderten Verschmutzung des Innenraums 23 liegen auch bei der Ausführungsform gemäß Figur 2 vor. Zusätzlich bietet die Ausführungsform gemäß Figur 2 einen sehr kompakten Aufbau, da sowohl die Klemmverriegelungsvorrichtung 2 zusammen mit den Druckzylindern 15 bzw. den Druckkissen 16 als vormontierbare Einheit erstellbar ist, so dass die gesamten Schließeinheit 25 kompakt baut und einer modulartigen Vormontage zugänglich ist.

Der Innenraum 23 der erfindungsgemäßen Klemmverriegelungsvorrichtung 2 kann luft- oder ölgefüllt sein. Es hat sich herausgestellt, dass auch eine Ölfüllung für eine hohe Reproduzierbarkeit und für ausreichend hohe Klemmkräfte Fₖ geeignet sind. Im Rahmen der Erfindung wurde erkannt, dass es insbesondere wesentlich ist, Feuchtigkeit, Stäube, Schmutz und insbesondere Fett von den zusammenwirkenden Flächen zum Klemmkraftaufbau der Klemmkraft Fₖ freizuhalten. Die zusammenwirkenden Flächen sind hierbei insbesondere die Innenseite 17 des Klemmmantels 13 und die Umfangsfläche 22 der Klemmeinrichtung 12.

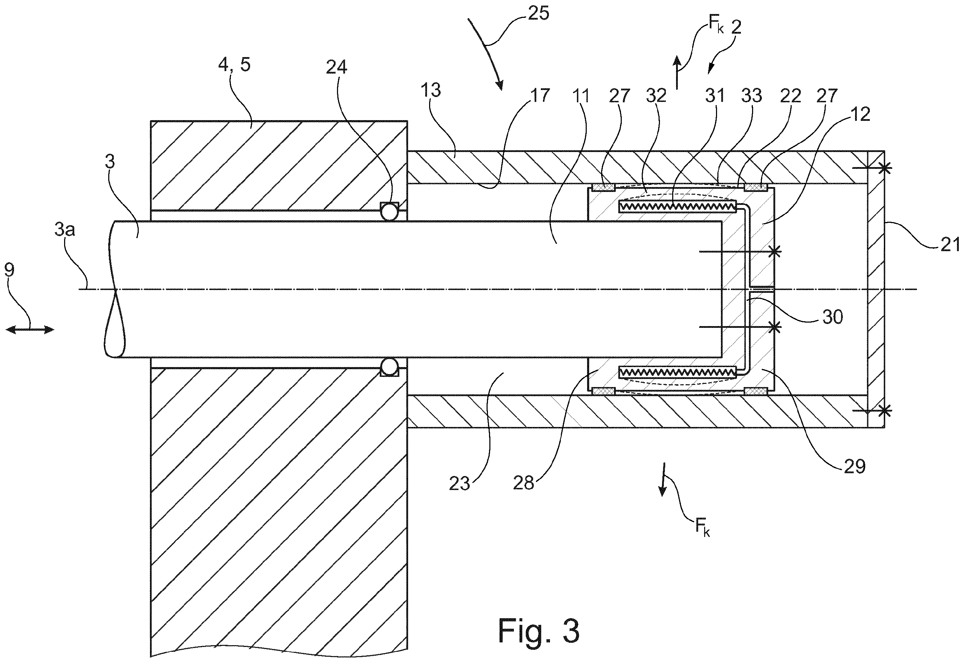

Eine erste Ausführungsform der Klemmeinrichtung 12 der erfindungsgemäßen Klemmverriegelungsvorrichtung 2 ist in Figur 3 schematisch im Längsschnitt dargestellt.

Die Säule 3 mit ihrer Säulenlängsachse 3a durchgreift eine Werkzeugaufspannplatte 4, 5. In der Werkzeugaufspannplatte 4, 5 sitzt die Abstreifereinrichtung 24. An der Werkzeugaufspannplatte 4, 5 ist der Klemmmantel 13 fest angeordnet, so dass die Ausführungsform gemäß Figur 3 der Anordnung gemäß Figur 1 betreffend eine Spritzgießmaschine 1 entspricht. Selbstverständlich ist die Klemmverriegelungsvorrichtung 2 gemäß Figur 3 auch auf eine Spritzgießmaschine 1 gemäß Figur 2 anwendbar.

Des Weiteren gilt für alle Ausführungsformen, dass die erfindungsgemäße Klemmverriegelungsvorrichtung 2 wahlweise an einer festen oder einer beweglichen Werkzeugaufspannplatte 4, 5 angeordnet sein kann.

Am ersten Ende 11 der Säule 3 ist die Klemmeinrichtung 12 beispielsweise mittels einer Schraubverbindung fest angebracht. Die Klemmeinrichtung 12 weist dabei eine im Wesentlichen topfförmige Raumform auf und ist auf das erste Ende 11 der Säule 3 endseitig aufgesetzt und in Öffnungs- und Schließrichtung 9 innerhalb des Klemmmantels 13 verschieblich, wenn sich die Klemmeinrichtung 12 in gelöstem Zustand (durchgezogene Linien der Figur 3) befindet. Die Klemmeinrichtung 12 weist an ihrer Umfangsfläche 22 Gleiteinrichtungen, beispielsweise Gleitringe 27 auf, mittels denen die Klemmeinrichtung 12 in gelöstem Zustand an der Innenseite 17 des Klemmmantels 13 gleitend geführt ist. Die Klemmeinrichtung 12 weist eine Topfwandung 28 auf, welche im Bereich des ersten Endes 11 zwischen der Säule 3 und dem Klemmmantel 13 angeordnet ist. Weiterhin weist die Klemmeinrichtung 12 einen Topfboden 29 auf, welcher mit seiner Innenseite an einer freien Stirnseite der Säule 3 anliegt. Der Topfboden 29 weist zumindest einen Ölkanal 30 auf, welcher mit Drucköl, z. B. Hydrauliköl beschickbar ist. Der Ölkanal 30 steht mit Druckräumen 31, welche im Inneren der Topfwandung 28 vorgesehen sind, kommunizierend in Verbindung. Über den Umfang der Topfwandung 28 gesehen, können mehrere Druckräume 31 vorgesehen sein oder ein einziger umlaufender, im Querschnitt schlitzförmiger Druckraum gebildet sein, welcher mit Drucköl oder allgemein gesagt, mit einem Druckmedium beschickbar ist.

Zwischen dem Druckraum 31 und der Umfangsfläche 22 verbleibt somit eine Restwandung 32 mit gegenüber der Topfwandung 28 verminderter Wandstärke. Diese Restwandung 32 ist elastisch radial nach Außen verformbar ausgebildet, wenn im Druckraum 31 Druckfluid unter Überdruck vorliegt (gestrichelte Linie 33 in Figur 3). Durch die radiale Aufweitung der Restwandung 32 kommt die Umfangsfläche 22 der Klemmeinrichtung 12 mit der Innenseite 17 des Klemmmantels 13 zur Anlage, so dass die radial nach Außen wirkende Klemmkraft Fₖ erzeugt wird. In Abhängigkeit des Druckes des Druckfluides in den Druckräumen 31 oder dem Druckraum 31 ergibt sich die Höhe der Klemmkraft Fₖ. Durch die Wahl eines geeignet hohen Überdruckes im Druckraum 31 kann somit die Säule 3 mittels der Klemmeinrichtung 12 bzgl. des Klemmmantels 13 klemmend festgelegt werden. Zum Lösen der Klemmung, d. h. zum Reduzieren der Klemmkraft Fₖ muss lediglich der Überdruck im Druckraum 31 abgebaut werden, beispielsweise durch Öffnen eines geeignet angeordneten Hydraulikventils (nicht gezeigt). Nach Abfall des Überdruckes im Druckraum 31 erfolgt eine elastische Rückverformung der Restwandung 32, so dass die Klemmeinrichtung 12 lediglich mit den Gleitringen 27 am Klemmmantel 13 anliegend wieder frei entlang der Öffnungs- und Schließrichtung 9 verschieblich gelagert ist.

Wie bereits vorbeschrieben, kann der Innenraum 23 des Klemmmantels 13 bevorzugt luft- oder ölgefüllt sein. Insbesondere im Falle einer Ölfüllung ist selbstverständlich für geeignete Überströmöffnungen oder Überströmkanäle zu sorgen, dass eine möglichst ungehinderte Bewegung der Klemmeinrichtung 12 innerhalb des Klemmmantels 13 sichergestellt ist. Die Ausführungsform der Klemmverriegelungsvorrichtung 2 gemäß Figur 3 kann - wie vorbeschrieben - mittels Druckzylindern 15 oder Druckkissen 16 zu einer Schließeinheit 25 weitergebildet sein. Selbstverständlich ist es auch möglich, mittels anderer Antriebe, beispielsweise mittels Hebelgetrieben für das Verfahren der Werkzeugaufspannplatte 4, 5 zueinander im Schnellgang oder für das Aufbringen der Schließkraft zu sorgen. In einem solchen Falle bilden dann die erfindungsgemäße Klemmverriegelungsvorrichtung 2 und die entsprechenden Vorrichtungen zum Schließkraftaufbau die Schließeinheit 25.

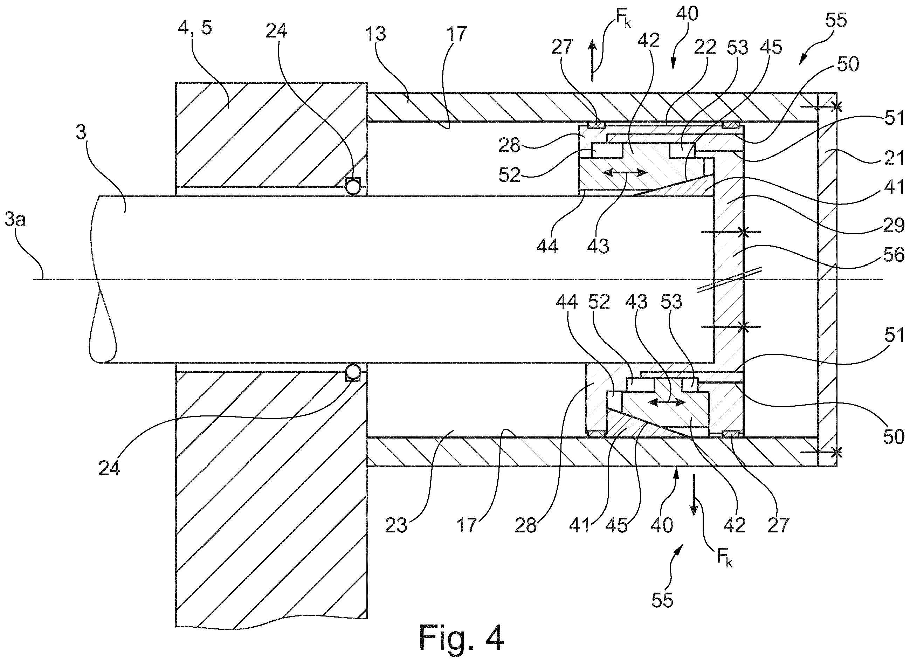

Eine zweite Ausführungsform der erfindungsgemäßen Klemmverriegelungsvorrichtung 2 ist in der oberen Schnittdarstellung oberhalb der Säulenlängsachse 3a gemäß Figur 4 dargestellt.

Eine dritte Ausführungsform der erfindungsgemäßen Klemmverriegelungsvorrichtung 2 ist in Figur 4 in der unteren Schnittdarstellung, unterhalb der Säulenlängsachse 3a schematisch dargestellt.

Beide in Figur 4 dargestellten Ausführungsformen der erfindungsgemäßen Klemmverriegelungsvorrichtung 2 sind als Keilklemmvorrichtungen 40 mit einer Klemmhülse 41 und einer Betätigungshülse 42 ausgebildet. Die Betätigungshülse 42 ist in einer Axialrichtung 43 innerhalb einer Klemmkammer 44, die in der Topfwandung 28 der Klemmeinrichtung 12 gebildet ist, hydraulisch verschiebbar angeordnet. Die Klemmkammer 44 ist bei der Ausführungsform gemäß Figur 4 oberhalb der Säulenlängsachse 3a zur Säule 3 hin geöffnet, wobei die Säule 3 umgebend die Klemmhülse 41 angeordnet ist. Die Klemmhülse 41 und die Betätigungshülse 42 wirken über ein Keil- oder Kegelfläche 45 zusammen.

Mittels Druckölleitungen 50, 51, welche mit Druckölkammern 52, 53 kommunizieren, kann durch geeignete Beaufschlagung der Druckölkammern 52 die Betätigungshülse 42 entlang der Axialrichtung 43 ein Stück auf die Klemmhülse 41 zu- oder von der Klemmhülse 41 weg bewegt werden. Wird die Betätigungshülse 42 auf die Klemmhülse 41 zubewegt, so wird unter Abstützung der Betätigungshülse 42 an der Topfwandung 28 und unter Abstützung der Betätigungshülse 42 auf der Keil- oder Kegelfläche 45 eine radial nach Außen wirkende Klemmkraft Fₖ erzeugt, die bewirkt, dass die Topfwandung 28 elastisch aufgeweitet wird und mit ihrer Umfangsfläche 22 mit der Innenseite 17 des Klemmmantels 13 in Kontakt gerät und somit die radial nach außen wirkende Klemmkraft Fₖ aufgebaut wird. Zum Lösen der Klemmung werden die Druckölkammern 52, 53 derart mit Drucköl beaufschlagt bzw. einem Druckabbau unterworfen, das die Betätigungshülse 42 ein Stück in Axialrichtung 43 von der Klemmhülse 41 wegbewegt wird. Somit kann die Topfwandung 28 ein Stück radial nach innen zurückfedern und somit die Klemmung lösen.

Die zweite Ausführungsform der erfindungsgemäßen Klemmeinrichtung 12 gemäß der Darstellung in Figur 4 unterhalb der Säulenlängsachse 3a nutzt das gleiche Wirkprinzip der Keilklemmvorrichtung 40, wobei jedoch die Klemmkammer 44 radial nach außen zur Innenseite 17 des Klemmmantels 13 hin offen ist. Die Betätigungshülse 42 ist ebenfalls über Druckölleitungen 50, 51 in Axialrichtung 43 innerhalb der Klemmkammer 44 ein Stück auf die Klemmhülse 41 zu und von dieser wegbewegbar. Hierzu werden die Druckölkammern 52, 53 entsprechend mit Drucköl oder unter Druck stehendem Fluid beaufschlagt. Die Klemmhülse 41 liegt radial außenseitig gleitend an der Innenseite 17 des Klemmmantels 13 an. Zum Aufbau der radial nach Außen wirkenden Klemmkraft Fₖ wird mittels Druckbeaufschlagung der Druckölkammer 53 die Betätigungshülse 42 in Axialrichtung 43 ein Stück auf die Klemmhülse 41 zubewegt, so dass die Klemmhülse 41 über die Keil- oder Kegelfläche 45 ein Stück radial nach Außen gedrückt wird und somit in verstärkter Anlage zur Innenseite 17 des Klemmmantels 13 gelangt. Hierdurch entsteht erhöhte Reibung zwischen der Klemmhülse 41 und dem Klemmmantel 13, wodurch die Klemmkraft Fₖ aufgebaut wird. Zum Lösen der Klemmung wird beispielsweise Überdruck aus der Klemmkammer 53 abgelassen und die Klemmkammer 52 mit Drucköl beaufschlagt, so dass die Betätigungshülse 42 in Axialrichtung 43 ein Stück von der Klemmhülse 41 wegbewegt wird. Die Klemmhülse 41 vermindert sich hierdurch elastisch etwas im Durchmesser und gibt die Klemmeinrichtung 12 relativ zum Klemmmantel 13 wieder frei.

Zur Abstützung der Klemmkraft Fₖ bei der Ausführungsform gemäß Figur 4 (unten) dient die Topfwandung 28, welche bevorzugt flächig an der Säule 3 anliegt. Die Betätigungshülse 42 stützt sich dabei an einer geeigneten Abstützfläche der Topfwandung 28 ab.

Bei der Ausführungsform gemäß Figur 4 (oben) erfolgt der Klemmkraftaufbau durch eine radiale Aufweitung der Betätigungshülse 42, welche eine radiale Aufweitung, die allerdings elastisch rückbildbar ist, auf der Topfwandung 28 bewirkt.

Bei der Ausführungsform gemäß Figur 4 (unten) erfolgt eine radiale Aufweitung der Klemmhülse 41, die elastisch rückführbar ist, wenn die Betätigungshülse 42 entsprechend innerhalb der Klemmkammer 44 verschoben ist.

Bei beiden Ausführungsformen gemäß Figur 4 wirken somit die Klemmhülse 41 und die Betätigungshülse 42 sowie Anlageflächen der Topfwandung 28, welche eine Klemmkammer 44 aufweist, als Keilklemmeinrichtung 55. Die Topfwandung 28 zusammen mit dem Topfboden 28 bilden dabei ein Gehäuse 56 zur Aufnahme der Keilklemmeinrichtung 55.

### Bezugszeichen

- 1: Spritzgießmaschine
- 2: Klemmverriegelungsvorrichtung
- 3: Säule
- 3a: Säulenlängsachse
- 4: erste Werkzeugaufspannplatte
- 5: zweite Werkzeugaufspannplatte
- 6: erste Formwerkzeughälfte
- 7: zweite Formwerkzeughälfte
- 8: Maschinenbett
- 9: Öffnungs- und Schließrichtung
- 10: Verfahrzylinder
- 11: erstes Ende von 3
- 12: Klemmeinrichtung
- 13: Klemmmantel
- 14: zweites Ende von 3
- 15: Druckzylinder
- 16: Druckkissen
- 17: Innenseite
- 18: Rohrkörper
- 19: erstes Ende von 13
- 20: zweites Ende von 13
- 21: Endwandung
- 22: Umfangsfläche
- 23: Innenraum
- 24: Abstreifereinrichtung
- 25: Schließeinheit
- 26: Bodenwandung
- 27: Gleitringe
- 28: Topfwandung
- 29: Topfboden
- 30: Ölkanal
- 31: Druckraum
- 32: Restwandung
- 33: gestrichelte Linie

- 40: Keilklemmvorrichtung
- 41: Klemmhülse
- 42: Betätigungshülse
- 43: Axialrichtung
- 44: Klemmkammer
- 45: Keil- oder Kegelfläche

- 55: Keilklemmeinrichtung
- 50, 51: Druckölleitungen
- 52, 53: Druckölkammern
- 55: Keilklemmeinrichtung
- 56: Gehäuse

- Fₖ: Klemmkraft

## Patentansprüche

1. Schließeinheit (25) einer Säulen (3) aufweisenden Spritzgießmaschine (1), insbesondere Schließeinheit (25) einer Zwei-Platten-Spritzgießmaschine (1), mit zumindest einer Klemmverriegelungsvorrichtung (2), mit welcher eine Säule (3) bezüglich einer der Werkzeugaufspannplatten (4; 5) an beliebigen Positionen entlang eines Verfahrweges der Werkzeugaufspannplatten (4; 5) relativ zueinander festlegbar ist, wobei die Klemmverriegelungsvorrichtung (2) zumindest eine Klemmeinrichtung (12) zum klemmenden Verriegeln der zumindest einen Säule (3) bezüglich eines Klemmmantels (13) aufweist,
**dadurch gekennzeichnet, dass**
die Klemmeinrichtung (12) in gelöstem Zustand zusammen mit der Säule (3) entlang des Verfahrweges innerhalb des Klemmmantels (13) verschieblich ist und zur Klemmung mittels der Klemmeinrichtung (12) eine bezüglich einer Säulenlängsachse (3a) radial nach außen gerichtete Klemmkraft (Fₖ) zwischen dem Klemmmantel (13) und der Klemmeinrichtung (12) bewirkbar ist.

2. Schließeinheit nach Anspruch 1,
**dadurch gekennzeichnet, dass**
der Klemmmantel (13) als fett- und/oder schmutzdichter und/oder trennmittelfreier Rohrkörper ausgebildet ist.

3. Schließeinheit nach Anspruch 1 oder 2,
**dadurch gekennzeichnet, dass**
der Klemmmantel (13) bezüglich einer Werkzeugaufspannplatte (4; 5) örtlich festgelegt ist.

4. Schließeinheit nach Anspruch 1 oder 2,
**dadurch gekennzeichnet, dass**
der Klemmmantel (13) unter Zwischenschaltung eines Druckzylinders (15) oder eines Druckkissens (16) mit der Werkzeugaufspannplatte (4; 5) verbunden ist.

5. Schließeinheit nach einem der vorangegangenen Ansprüche,
**dadurch gekennzeichnet, dass**
ein Innenraum (23) des Klemmmantels (13) luft- oder ölgefüllt ist.

6. Schließeinheit nach einem der vorangegangenen Ansprüche,
**dadurch gekennzeichnet, dass**
die Klemmeinrichtung (12) zumindest einen hydraulisch mit Fluid beschickbaren Druckraum (31) aufweist, wobei mittels unter Druck stehendem Fluid der zumindest eine Druckraum (31) der Klemmeinrichtung (12) zur Erzeugung der Klemmkraft (Fₖ) radial elastisch aufweitbar ist.

7. Schließeinheit nach einem der vorangegangenen Ansprüche,
**dadurch gekennzeichnet, dass**
die Klemmeinrichtung (12) eine hydraulisch betätigbare Keilklemmvorrichtung (55) mit einer Klemmhülse (41) und einer Betätigungshülse (42) aufweist, wobei die Betätigungshülse (42) innerhalb eines Gehäuses (56) der Klemmeinrichtung (12) in einer Axialrichtung (43) hydraulisch verschiebbar angeordnet ist und über eine Keil- oder Kegelfläche (45) mit der Klemmhülse (41) zusammenwirkt.

8. Schließeinheit nach einem der vorangegangenen Ansprüche,
**dadurch gekennzeichnet, dass**
die Klemmeinrichtung (12) radial innen zur Säule (3) weisend eine offene Klemmkammer (44) besitzt und das Gehäuse (56) der Klemmeinrichtung (12) durch Reaktionskräfte der Keilklemmeinrichtung (55) radial elastisch aufweitbar ist.

9. Schließeinheit nach einem der vorangegangenen Ansprüche,
**dadurch gekennzeichnet, dass**
die Klemmeinrichtung (12) radial nach außen zum Klemmmantel (13) weisend eine offene Klemmkammer (44) besitzt, in der die Klemmhülse (41) mit einer Innenseite (17) des Klemmmantels (13) reibschlüssig zusammenwirkbar angeordnet ist.

10. Schließeinheit nach einem der vorangegangenen Ansprüche,
**dadurch gekennzeichnet, dass**
im Bereich vor dem Eintritt eines Säulenabschnittes in den Innenraum (17) des Klemmmantels (13) eine Abstreifereinrichtung (24) vorgesehen ist, mittels der Fett und/oder Schmutz und/oder Trennmittel von der Säule (3) abstreifbar ist.

## Claims

1. A closing unit (25) of an injection-moulding machine (1), said injection-moulding machine having columns (3), in particular a closing unit (25) of a two-plate injection-moulding machine (1), said closing unit comprising at least one clamping lock device (2), by means of which a column (3) can be fastened with respect to one of the tool-clamping plates (4; 5) at any positions along a travel path of the tool clamping plates (4; 5) relative to one another, wherein the clamping lock device (2) has at least one clamping apparatus (12) for locking the at least one column (3) with respect to a clamping jacket (13) in a clamping manner,
**characterized in that**
the clamping apparatus (12) is slidable along the travel path within the clamping jacket (13) together with the column (3) in the released state and a clamping force (Fₖ) directed radially outward with respect to a column longitudinal axis (3a) can be effected between the clamping jacket (13) and the clamping apparatus (12) by means of the clamping apparatus (12) for the purpose of clamping.

2. The closing unit according to Claim 1,
**characterized in that**
the clamping jacket (13) is configured as a grease-proof and/or dirt-proof and/or release agent-free tubular body.

3. The closing unit according to Claim 1 or 2,
**characterized in that**
the clamping jacket (13) is locally immobilized with respect to a tool clamping plate (4; 5).

4. The closing unit according to Claim 1 or 2,
**characterized in that**
the clamping jacket (13) is connected with the tool clamping plate (4; 5) with intercalation of a pressure cylinder (15) or of a pressure pad (16).

5. The closing unit according to one of the preceding claims,
**characterized in that**
an interior (23) of the clamping jacket (13) is filled with air or oil.

6. The closing unit according to one of the preceding claims,
**characterized in that**
the clamping apparatus (12) has at least one pressure chamber (31), able to be charged hydraulically with fluid, wherein by means of fluid which is under pressure, the at least one pressure chamber (31) of the clamping apparatus (12) is able to be radially widened elastically for the production of the clamping force (Fₖ).

7. The closing unit according to one of the preceding claims,
**characterized in that**
the clamping apparatus (12) has a hydraulically actuatable wedge clamping device (55) with a clamping sleeve (41) and with an actuating sleeve (42), wherein the actuating sleeve (42) is arranged within a housing (56) of the clamping apparatus (12) so as to be hydraulically displaceable in an axial direction (43) and cooperates with the clamping sleeve (41) via a wedge- or tapered surface (45).

8. The closing unit according to one of the preceding claims,
**characterized in that**
the clamping apparatus (12) has an open clamping chamber (44) pointing radially inwards to the column (3), and the housing (56) of the clamping apparatus (12) is able to be widened radially elastically by reaction forces of the wedge clamping apparatus (55).

9. The closing unit according to one of the preceding claims,
**characterized in that**
the clamping apparatus (12) has an open clamping chamber (44) pointing radially outwards to the clamping jacket (13), in which open clamping chamber the clamping sleeve (41) is arranged so as to be able to cooperate in a frictionally engaged manner with an inner side (17) of the clamping jacket (13).

10. The closing unit according to one of the preceding claims,
**characterized in that**
in the region before the entry of a column portion into the interior (17) of the clamping jacket (13), a stripper device (24) is provided, by means of which grease and/or dirt and/or release agent is able to be stripped off from the column (3).

## Revendications

1. Unité de fermeture (25) d'une presse à injection (1) présentant des colonnes (3), en particulier, unité de fermeture (25) d'une presse à injection (1) à deux plateaux, comprenant au moins un dispositif de verrouillage par blocage (2) avec lequel une colonne (3) peut être fixée par rapport à un des plateaux de serrage d'outil (4 ; 5) en des positions au choix le long d'un trajet des plateaux de serrage d'outil (4 ; 5) l'un par rapport à l'autre, dans lequel le dispositif de verrouillage par blocage (2) présente au moins un dispositif de blocage (12) pour le verrouillage par blocage de l'au moins une colonne (3) par rapport à une enveloppe de blocage (13),
**caractérisée en ce que**
le dispositif de blocage (12), dans l'état détaché, est mobile avec la colonne (3) le long d'un trajet à l'intérieur de l'enveloppe de blocage (13) et pour le serrage au moyen du dispositif de blocage (12), une force de blocage (Fₖ) exercée radialement vers l'extérieur par rapport à un axe longitudinal de colonne (3a) peut être produite entre l'enveloppe de blocage (13) et le dispositif de blocage (12).

2. Unité de fermeture selon la revendication 1,
**caractérisée en ce que**
l'enveloppe de blocage (13) est conçue en tant que corps tubulaire étanche aux graisses et/ou aux saletés et sans agent de démoulage.

3. Unité de fermeture selon la revendication 1 ou 2,
**caractérisée en ce que**
l'enveloppe de blocage (13) est fixée localement par rapport à un plateau de serrage d'outil (4 ; 5) .

4. Unité de fermeture selon la revendication 1 ou 2,
**caractérisée en ce que**
l'enveloppe de blocage (13) est reliée au plateau de serrage d'outil (4 ; 5) par l'intermédiaire d'un cylindre de pression (15) ou d'un coussin de pression (16).

5. Unité de fermeture selon l'une des revendications précédentes,
**caractérisée en ce**
**qu'**un intérieur (23) de l'enveloppe de blocage (13) est rempli d'air ou d'huile.

6. Unité de fermeture selon l'une des revendications précédentes,
**caractérisée en ce que**
le dispositif de blocage (12) présente au moins un espace de pression (31) pouvant être alimenté par voie hydraulique avec un fluide, dans lequel l'au moins un espace de pression (31) du dispositif de blocage (12) peut être élargi élastiquement radialement au moyen de fluide sous pression pour produire la force de blocage (Fₖ) .

7. Unité de fermeture selon l'une des revendications précédentes,
**caractérisée en ce que**
le dispositif de blocage (12) présente un dispositif de blocage cunéiforme (55) pouvant être actionné par voie hydraulique avec un manchon de blocage (41) et un manchon d'actionnement (42), dans lequel le manchon d'actionnement (42) est disposé à l'intérieur d'un boîtier (56) du dispositif de blocage (12) en étant mobile par voie hydraulique dans un sens axial (43) et coopère avec le manchon de blocage (41) par une surface cunéiforme ou conique (45).

8. Unité de fermeture selon l'une des revendications précédentes,
**caractérisée en ce que**
le dispositif de blocage (12) possède une chambre de blocage (44) ouverte en pointant radialement à l'intérieur en direction de la colonne (3) et le boîtier (56) du dispositif de serrage (12) peut être élargi élastiquement radialement par des forces de réaction du dispositif de blocage cunéiforme (55).

9. Unité de fermeture selon l'une des revendications précédentes,
**caractérisée en ce que**
le dispositif de blocage (12) possède une chambre de blocage (44) ouverte en pointant radialement vers l'extérieur en direction de l'enveloppe de blocage (13), dans laquelle le manchon de blocage (41) est disposé en coopération par friction avec une face intérieure (17) de l'enveloppe de blocage (13) .

10. Unité de fermeture selon l'une des revendications précédentes,
**caractérisée en ce**
**qu'**au niveau d'avant l'entrée d'un tronçon de colonne dans l'espace intérieur (17) de l'enveloppe de blocage (13), il est prévu un dispositif de raclage (24) avec lequel de la graisse et/ou de la saleté et/ou des agents de démoulage peuvent être raclés de la colonne (3).
